# EUROPÄISCHE PATENTSCHRIFT

(11) **EP 2 308 677 B1**
(45) Veröffentlichungstag und Bekanntmachung des Hinweises auf die Patenterteilung: **18.12.2013**
(21) Anmeldenummer: 10176095.7
(22) Anmeldetag: 10.09.2010
(51) Int. Cl.: B32B 27/22, B32B 27/30, B60R 13/00

(54) **Mehrschichtige Folie und Verfahren zu ihrer Herstellung**
Multilayer film and method for its production
Film multicouche et son procédé de fabrication

(30) Priorität: 06.10.2009 DE 102009044184
(43) Veröffentlichungstag der Anmeldung: 13.04.2011
(73) Patentinhaber: Benecke-Kaliko AG, 30419 Hannover (DE)
(72) Erfinder: Freudenmann, Roland, 30900, Wedemark (DE); Mielke, Dirk, 30966, Hemmingen (DE); Seidel, Christian, 30163, Hannover (DE); Bühring, Jürgen, 30900, Wedemark (DE)
(74) Vertreter: Finger, Karsten

(56) Entgegenhaltungen:
- US-A1- 2004 044 159
- DATABASE WPI Week 198830 Thomson Scientific, London, GB; AN 1988-209033 XP002618258, -& JP 63 145027 A (SEKISUI CHEM IND CO LTD) 17. Juni 1988 (1988-06-17)

## Beschreibung

Die Erfindung betrifft eine mehrschichtige Folie, die eine ggf. lackierte obere Schicht aus Polyvinylchlorid sowie eine oder mehrere untere Schichten aufweist, wobei von letzteren mindestens eine aus weichgemachten Polyvinylchlorid besteht, insbesondere für die Innenverkleidung von Fahrzeugen, wobei die Schichten aus Polyvinylchlorid einen oder mehrere Weichmacher enthalten. Hierbei ist das Polyvinylchlorid darüberhinaus natürlich jeweils mit den üblicherweise zugehörigen Additiven versehen. Die Erfindung betrifft weiterhin ein Verfahren zur Herstellung solcher mehrschichtigen Folien sowie ein aus einer solchen Folie bestehendes Innenverkleidungsteil eines Fahrzeuges.

Folien aus Polyvinylchlorid für die Innenverkleidung von Kraftfahrzeugen, für Möbel, Taschen oder ähnliches, landläufig auch als Kunstleder bezeichnet, sind weithin bekannt und werden z. B. in Fahrzeugen verwendet als Überzug von Armaturenbrettern, Sitzen, Türeinsätzen, Sonnenblenden etc. Solche Folien besitzen üblicherweise einen mehrschichtigen Aufbau, sind oft unterschäumt und weisen auf ihrer Oberseite eine dreidimensional strukturierte, geprägte Oberfläche auf, nämlich eine so genannte Musterung oder Narbung in verschiedensten Formen und Ausführungen. Der mehrschichtige Aufbau besteht in aller Regel aus einer oberen Deck- oder Dekorschicht, die mit der geprägten oder eingeformten Oberfläche versehen ist, und aus einer oder mehreren Unterschicht.

Durch entsprechendes Einstellen der Schichten, auch durch angepasste Weichheit oder durch die bereits genannten geschäumten Schichten entsteht eine ansprechende Haptik, d.h. eine angenehm "weiche" Griffigkeit des Bezuges. Schichten und somit Folien aus Polyvinylchlorid (PVC) enthalten auch hierzu auch Weichmacher, die die langfristige Flexibilität der Folien sicherstellen sollen.

Folien aus Polyvinylchlorid, z.B. PVC Kunstleder, kommen im Laufe ihres Einsatzes / ihrer Anwendung mit den unterschiedlichsten Materialien in Berührung, etwa mit Ölen, Emulsionen oder insbesondere auch mit Pflege- oder Reinigungsmitteln. Oft wirken jedoch solche Materialien als Lösemittel oder beinhalten Lösemittel für den Weichmacher im PVC. So kann der Nachteil entstehen, dass der Weichmacher herausgelöst wird / extrahiert wird bzw. ausdiffundiert, wenn das PVC in Kontakt mit dem Lösemittel kommt. Die Lösemittel können direkt, oder, auch wie bereits dargestellt, in Form von Reinigungsmittel oder Kosmetika auf das Kunstleder kommen und diesen Effekt herbeiführen.

Durch das Herauslösen/ Extrahieren / Ausdiffundieren des Weichmachers aus dem PVC wird das Kunstleder spröde und verliert seine Flexibilität. Bei Belastung, z.B. durch Knicken, kann es dann zum Bruch des Kunstleders kommen. Die Folie / das Kunstleder zeigt dann immer mehr Risse. Durch weitere Belastung kann sich der obere Teil oder die obere Folie sogar aus dem Verbund lösen, wonach die unteren Schichten und sogar die textile Trägerschicht zum Vorschein kommen, falls vorhanden. Eine solche Schadstelle wird im Lauf der Zeit immer deutlicher sichtbar. Da im Bereich des Automobilinterieurs insgesamt ein starker Trend zur Verbesserung der Qualitätsanmutung zu beobachten ist, kann es dann zur Reklamation an den Hersteller kommen.

Die GB 1,082,919 offenbart zur Lösung dieses Problems eine außenliegende Schutzschicht für PVC-Folien mit Weichmacher, die die Migration von Weichmachern infolge des Kontaktes mit Lösungsmitteln verhindern soll. Die Schutzschicht beinhaltet dabei eine filmbildende Zusammensetzung aus einem Copolymer, einem Polyisocyanat und einem organischen Lösungsmittel. Nachteilig hierbei ist das relativ aufwendige Verfahren zum Aufbringen einer zusätzlichen Beschichtung.

Auch die US 2009/0062454 A1 offenbart eine Zusammensetzung für eine Schutzschicht einer PVC-Folie, wobei die Schutzschicht aus bestimmten PVC-Harzen, aus polymeren oder "schweren" monomeren Weichmachern und aus einer Auswahl aus einer Gruppe von Additiven besteht. Die Zusammensetzung soll Migration von Weichmachern aus der PVC-Folie durch die Schutzschicht verhindern. Auch hier ist es erforderlich eine besondere Schicht aufzubringen. Weiterhin ist hier das Rotationssinterverfahren inklusive der dazu nötigen Rezepturen als Herstellverfahren angesprochen und nicht das Kalandrieren , Extrudieren oder Streichen.

Die JP 63 145027 A (Database WPI Week 198830 AN 1988209033) offenbart als Abstract ein Markierband bzw. einen Markierfilm aus Vinylchlorid mit einem nicht wandernden bzw. nicht flüchtigen Weichmacher mit einem Molekulargewicht von vorzugsweise 2000 bis 4000. Die Offenbarung enthält kein Hinweis auf den Aufbau von mehrschichtigen Folien.

Die US 2004/0044159 A1 offenbart allgemein ein geminal zweifach substituiertes Olefincarbon zur Verwendung als Weichmacher im PVC. Eine besondere Anwendung in mehrschichtigem PVC ist nicht offenbart.

Für die Erfindung bestand also die Aufgabe, eine mehrschichtige PVC-Folie bereitzustellen, bei welcher das Herauslösen der Weichmacher und damit eine Versprödung verhindert wird, die kostengünstig und einfach herzustellen ist und die über eine lange Einsatzdauer flexibel und belastbar bleibt.

Gelöst wird diese Aufgabe durch die Merkmale des Hauptanspruchs. Weitere vorteilhafte Ausbildungen sind in den Unteransprüchen offenbart. Ebenfalls sind besonders geeignete Verfahren zur Herstellung einer solchen Folie offenbart sowie ein Verkleidungsteil in Form eines Sitzbezuges mit einer solchen Folie.

Dabei enthält der nach außen weisende Bereich der oberen Schicht aus Polyvinylchlorid einen oder mehrere monomere Weichmacher aus der Gruppe Phthalsäureester ab C12-Alkyresten und Trimelitsäureester ab C7-Alkyresten, die ein Molgewicht von mindestens 500 g/mol aufweisen.

Die Verwendung der Weichmacher mit einem solchen Molgewichten in der äußeren Polyvinylchloridschicht oder im nach außen weisenden Bereich der oberen Schicht aus Polyvinylchlorid verhindert die Extraktion der Weichmacher bzw. die Diffusion der Weichmacher aus der Folie bei Kontakt der oberen Polyvinylchloridschicht mit den üblichen Materialien, die Lösungsmittel für Weichmacher enthalten, wie etwa ölige Substanzen oder Reinigungsmittel oder Kosmetika für Kunststoffe. Die Flexibilität des Kunstleders bleibt erhalten, wie sich bei Biegeversuchen deutlich zeigt (siehe unten).

Natürlich enthalten die Schichten aus derart weichgemachtem Polyvinylchorid auch die üblichen Additive wie z.B. Stabilisatoren, Füllstoffe, Pigmente.

Ein besonderer Vorteil bei dieser erfindungsgemäßen Ausbildung der mehrschichtigen Folie liegt darin, dass das an sich bekannte, in der Handhabung einfache und kostengünstige Umkehrstreichverfahren zu Herstellung angewandt werden kann. Dieses Verfahren besteht darin, dass auf ein Trägermaterial, vorzugsweise eine Trägerfolie aus z.B. Papier, zunächst die obere Schicht aus Polyvinylchlorid aufgestrichen wird. Danach werden sukzessive die eine oder mehreren unteren Schichten aus Polyvinylchlorid aufgestrichen, mit Ausnahme natürlich eines etwa vorhandenen textilen Trägers. Danach erfolgt die Trocknung der durch das Aufstreichen entstandenen Schichtverbundes sowie das Abziehen des Schichtverbundes vom Trägermaterial, wonach gegebenenfalls eine Lackierung und Prägung der Außenoberfläche des Schichtverbundes und das Aufkaschieren einer textilen Schicht auf der Unterseite des Schichtverbundes erfolgt wodurch der aufgestrichenen Schichtverbund zur mehrschichtige Folie vervollständigt wird. Das erfindungsgemäße Kunstleder kann also in einer seiner Ausbildungen sofort und ohne größere Produktionsumstellungen erzeugt werden.

Dabei enthalten die unteren Schichten aus Polyvinylchlorid einen oder mehrere Weichmacher mit einem Molekulargewicht von 400 bis 600 g/mol. Eine solche Folie ist im Hinblick auf die unten liegenden Schichten einfach und kostengünstig im Streichverfahren herzustellen. Zudem ergibt sich bei der Verwendung der Weichmacher mit solchen Molgewichten für die unteren Schichten insgesamt ein sehr dehnfähiges Kunstleder, insbesondere dann wenn es auf eine textilen Trägerschicht, einem textilen Gewirk oder Gestrick aufkaschiert ist. Kunstleder werden auf der Unterseite häufig mit einer textilen Schicht kaschiert, üblicherweise mit PVC Kleber verklebt, um dadurch eine hohe mechanische Festigkeit, ein gutes Dehnverhalten, eine hohe Weiterreißkraft und Nahtfestigkeit bereitzustellen. Dieses Verhalten wird durch die erfindungsgemäße Ausbildung der Folie noch verstärkt. Dabei besteht eine der unteren Schichten aus geschäumtem Polyvinylchlorid sowie zugehörigen Additiven. Das erhöht eine "weiche" Griffigkeit der Folie, welche den Erhalt der Flexibilität durch das Verhindern von Extraktion/Diffusion von Weichmachern lange und besonders angenehm fühlbar werden lässt.

Eine weitere vorteilhafte Ausbildung besteht darin, dass die unteren Schichten aus Polyvinylchlorid als Weichmacher ein oder mehrere aus den Gruppen der Trimelitsäureester, Sebacinsäurester Adipinsäureester, epoxydierte Öle (z.B. ESO), Phosphorsäureester, Zitronensäureester, Fettsäureester, Terephthalsäureester oder Phthalsäureester enthalten, also monomere Weichmacher. Vorzugsweise verwendet man hier als Trimelitsäureester einen Trialkyltrimelitsäureester mit Alkylresten von C₆H₁₃ bis C₁₁H₂₅, als Sebacinsäurester einen Sebacinsäureester mit Alkylresten von C₈H₁₇ bis C₁₃H₂₇ und/oder als Phthalsäureester einen Dialkylphthalsäureester mit Alkylresten von C₉H₁₈ bis C₁₃H₂₇. Die erlaubt bei Verwendung einfacher Materialien den Erhalt einer ausreichenden Flexibilität des Kunstleders.

Eine weitere vorteilhafte Ausbildung besteht darin, dass der nach außen weisende Bereich der oberen Schicht aus Polyvinylchlorid einen oder mehrere Weichmacher enthält, die ein Molgewicht mit einem Gewichtmittel M_{w} von mindestens 1500 g/mol, vorzugsweise von mindestens 2000 g/mol aufweisen. Bei Weichmachern mit einem solchen Molgewicht ist die Extraktion der Weichmacher aus der Folie nahezu ausgeschlossen, wenn die Folie in Kontakt mit üblichen Lösungsmitteln für Weichmacher gelangt. Weder bei der Verwendung von monomeren Weichmachern eines solche Molgewichts noch bei polymeren Weichmachern dieser Art findet eine Diffusion der Weichmacher aus der Folie statt, wenn Ölige Substanzen, Reinigungsmittel oder Kosmetika für Kunststoffe mit organische Lösemitteln aufgetragen werden.

Eine weitere vorteilhafte Ausbildung besteht darin, dass der nach außen weisende Bereich der oberen Schicht einen oder mehrere polymere Weichmacher enthält, vorzugsweise Ester auf Basis der Phthalsäure, Sebacinsäure oder der Adipinsäure. Die Verwendung polymerer Weichmacher erhöht noch einmal die Resistenz gegen Extraktion durch Lösemittel / gegen ein Ausdiffundieren der Weichmacher.

Eine weitere vorteilhafte Ausbildung besteht darin, dass der nach außen weisende Bereich der oberen Schicht ein Gemisch aus polymeren und/oder monomeren Weichmachern in der Oberschicht enthält. Hierdurch kann auf einfache Weise eine Anpassung der Diffusionsneigung an unterschiedliche Anwendungen erfolgen.

Ein besonders geeignetes Verfahren zur Herstellung einer mehrschichtigen Folie, die in den nach außen weisende Bereich der oberen Schicht einen oder mehrere Weichmacher enthält mit einem Molekulargewicht mit Gewichtsmittel M_{w} von mehr als 1500 g/mol besteht in einer Kombination von Umkehrstreichverfahren und Kalandrier- oder Extrusionsverfahren. Dabei wird zunächst oder parallel die obere Schicht aus Polyvinylchlorid (obere Folienschicht / Kunstlederschicht) mit den üblichen zugehörigen Additiven mittels eines Kalandrierverfahrens oder mittels eines Extrudierverfahrens hergestellt.

Danach oder daneben wird der "Unterbau" der Folie, nämlich eine oder mehrere untere Schichten aus Polyvinylchlorid im Umkehrstreichverfahren hergestellt, wobei sukzessive die eine oder mehreren unteren Schichten aus Polyvinylchlorid auf ein Trägermaterial, d.h. vorzugsweise auf eine Trägerfolie aus z.B. Papier, aufgestrichen werden, inclusive einer evtl. geplanten textilen Schicht. Der durch das Aufstreichen entstandene Schichtverbund/Teilverbund von "unteren Schichten" wird getrocknet/geliert und danach vom Trägermaterial abgezogen. Damit ist für diesen Teilverbund das Umkehrstreichverfahren beendet..

Danach erfolgt das Zusammenfügen von Oberschicht und unteren Schichten. Hierzu wird die im Kalandrier- oder Extrudierverfahren hergestellten Oberschicht auf den im Umkehrstreichverfahren entstandenen Schichtverbund aus unteren Schichten aufkaschiert, in der Regel durch Verkleben mittels Kleber oder das so genannte thermisches Kaschieren, nämlich das Verkleben in der Wärme.

Anschließend oder zuvor erfolgt gegebenenfalls eine Lackierung und Prägung der Außenoberfläche der Oberschicht, wodurch die erfindungsgemäße mehrschichtige Folie nun vervollständigt ist. Das erfindungsgemäße Produkt kann auch noch mit weiteren Schichten wie z.B. Schäume und weitere Textilien, kaschiert oder verbunden werden, die zur Verarbeitung oder Wertanmutung nötig sind. Die Reihenfolge der Verfahrensschritte kann, wie oben dargestellt, variieren.

Besonders vorteilhaft lässt sich eine solche Folie als Innenverkleidungsteil für ein Fahrzeug verwenden, insbesondere als Sitzbezug für einen Fahrzeugsitz, der üblicherweise durch Knickungen, Biegung und Dehnung stark strapaziert wird.

Anhand eines Ausführungsbeispieles soll die Erfindung näher erläutert werden. Es zeigen
- Fig. 1: den Aufbau einer erfindungsgemäßen PVC-Folie im Schnitt
- Fig. 2: die Ergebnisse eines Dreipunktbiegeversuches mit verschiedenen Ausführungen der erfindungsgemäßen Folie im Vergleich mit einer Standardfolie

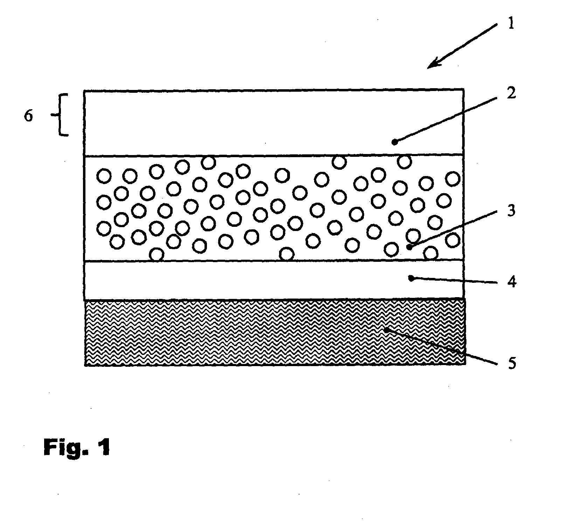

Die Fig. 1 zeigt den Aufbau einer erfindungsgemäßen PVC-Folie für die Innenverkleidung von Fahrzeugen im Schnitt, nämlich eine mehrschichtige Folie 1, die eine obere Schicht aus Polyvinylchlorid 2 sowie eine untere Schichten 3 aus geschäumtem Polyvinylchlorid aufweist, auf die von untern eine textile Trägerschicht 5 mittels eines Klebers 4 aufkaschiert ist. Die obere Schicht 2 und die Schaumschicht 3 aus Polyvinylchlorid enthalten einen oder mehrere Weichmacher. Der nach außen weisende Bereich 6 der oberen Schicht 2 enthält einen oder mehrere Weichmacher, die ein Molekulargewicht von mindestens 500 g/mol aufweisen.

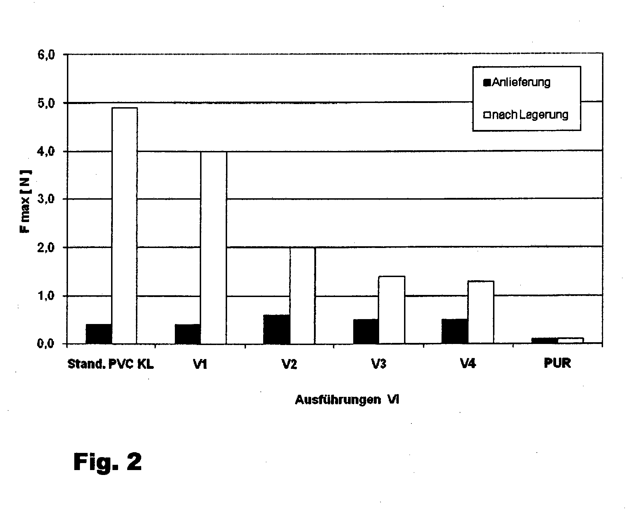

Fig. 2 zeigt die Ergebnisse eines Dreipunktbiegeversuches mit verschiedenen Ausführungen V1 bis V4 der erfindungsgemäßen Folie im Vergleich mit einer Standardfolie und mit einer Polyurethanfolie (PUR) als Produkt ohne Weichmacher. Dabei wurden Proben der verschiedenen Ausführungen V1 bis V4 über einen längeren Zeitraum in einem Öl gelagert, welches als Lösungsmittel für Weichmacher wirkt. Danach wurde in einem üblichen Dreipunkt-Biegeversuch die Kraft gemessen, die zum Verbiegen der Probe erforderlich war. Je höher die Kraft, desto größer die Verhärtung bzw. Versprödung der Probe durch Extraktion der Weichmacher bei der Öl-Lagerung. Es zeigt sich, dass das erfindungsgemäße Kunstleder in den Ausführungen V1 bis V4 im Vergleich zu einem Standard-Automobilkunstleder (Standard PVC KL) wesentlich besser seine Flexibilität beibehält, auch bei intensiven Kontakt mit dem öligen Extraktionsmedium. Die Ausführung V4 ist dabei eine, bei der der nach außen weisende Bereich der oberen Schicht aus Polyvinylchlorid einen Weichmacher enthält, der ein Molgewicht mit Gewichtsmittel M_{w} von mindestens 2000 g/mol aufweist.

### Bezugszeichenliste

### (Teil der Beschreibung)

- 1: mehrschichtige Folie
- 2: obere Schicht aus Polyvinylchlorid
- 3: untere Schichten aus geschäumtem Polyvinylchlorid
- 4: Kleber
- 5: textile Trägerschicht
- 6: nach außen weisende Bereich der oberen Schicht

## Patentansprüche

1. Mehrschichtige Folie, die eine ggf. lackierte obere Schicht (2) aus weichgemachten Polyvinylchlorid sowie eine oder mehrere untere Schichten (3) aufweist, wobei von letzteren mindestens eine aus weichgemachten Polyvinylchlorid besteht, insbesondere für die Innenverkleidung von Fahrzeugen, wobei die Schichten aus Polyvinylchlorid (2, 3) einen oder mehrere Weichmacher enthalten, **dadurch gekennzeichnet, dass** der nach außen weisende Bereich (6) der oberen Schicht (2) einen oder mehrere monomere Weichmacher aus der Gruppe Phthalsäureester ab C12-Alkyresten und Trimelitsäureester ab C7-Alkyresten enthält, die ein Molekulargewicht von mindestens 500 g/mol aufweisen, und dass die unteren Schichten (3) aus Polyvinylchlorid einen oder mehrere Weichmacher enthalten mit einem Molekulargewicht von 400 bis 600 g/mol und eine der unteren Schichten aus geschäumtem Polyvinylchlorid sowie zugehörigen Additiven besteht.

2. Mehrschichtige Folie nach Anspruch 1, bei der die unteren Schichten (3) aus Polyvinylchlorid als Weichmacher ein oder mehrere aus den Gruppen der Trimelitsäureester, Sebacinsäurester Adipinsäureester, epoxydierte Öle, Phosphorsäureester, Zitronensäureester, Fettsäureester, Terephthalsäureester oder Phthalsäureester enthalten.

3. Mehrschichtige Folie nach einem der Ansprüche 1 oder 2 , bei der der nach außen weisende Bereich (6) der oberen Schicht (2) aus Polyvinylchlorid einen oder mehrere Weichmacher enthält, die ein Molgewicht mit einem Gewichtsmittel M_{w} von mindestens 1500 g/mol, vorzugsweise von mindestens 2000 g/mol aufweisen.

4. Mehrschichtige Folie nach Anspruch 2 oder 3, bei der der nach außen weisende Bereich (6) der oberen Schicht (2) ein Gemisch aus polymeren und/oder monomeren Weichmachern in der Oberschicht enthält.

5. Verfahren zur Herstellung einer mehrschichtigen Folie nach einem der Ansprüche 3 bis 4, bei dem die folgende Verfahrensschritte durchgeführt werden:
- Herstellung der oberen Schicht aus Polyvinylchlorid mittels eines Kalandrierverfahrens oder mittels eines Extrudierverfahrens,
- Herstellung der einen oder mehreren unteren Schichten aus Polyvinylchlorid im Umkehrstreichverfahren, wobei
a) sukzessive die eine oder mehreren unteren Schichten aus Polyvinylchlorid auf ein Trägermaterial aufgestrichen und ggf. eine abschließende textile Schicht zugeführt werden,
b) der durch das Aufstreichen entstandene Schichtverbundes von unteren Schichten getrocknet/geliert und vom Trägermaterial abgezogen wird,
- Aufkaschieren der im Kalandrier- oder Extrudierverfahren hergestellten Oberschicht auf den im Umkehrstreichverfahren entstandenen Schichtverbund aus unteren Schichten,
- gegebenenfalls eine Lackierung und Prägung der Außenoberfläche der Oberschicht.

6. Innenverkleidungsteil für ein Fahrzeug, insbesondere Sitzbezug für einen Fahrzeugsitz, bestehend aus einer Folie nach einem der Ansprüche 1 bis 4.

## Claims

1. Multilayer foil which has an optionally coated upper layer (2) made of plasticized polyvinyl chloride and which also has one or more lower layers (3), where at least one of the latter is composed of plasticized polyvinyl chloride, in particular for the interior cladding of vehicles, where the layers made of polyvinyl chloride (2, 3) comprise one or more plasticizers, **characterized in that** the outward-facing region (6) of the upper layer (2) comprises one or more monomeric plasticizers from the group of phthalic esters starting from C12-alkyl moieties and trimellitic esters starting from C7-alkyl moieties, where the molar mass of these is at least 500 g/mol, and that the lower layers (3) made of polyvinyl chloride comprise one or more plasticizers with molar mass from 400 to 600 g/mol and one of the lower layers is composed of foamed polyvinyl chloride, and also of attendant additives.

2. Multilayer foil according to Claim 1, in which the lower layers (3) made of polyvinyl chloride comprise, as plasticizer, one or more from the groups of the trimellitic esters, sebacic esters, adipic esters, epoxidized oils, phosphoric esters, citric esters, fatty acid esters, terephthalic esters or phthalic esters.

3. Multilayer foil according to Claim 1 or 2, in which the outward-facing region (6) of the upper layer (2) made of polyvinyl chloride comprises one or more plasticizers having a molar mass with a weight average M_{w} of at least 1500 g/mol, preferably of at least 2000 g/mol.

4. Multilayer foil according to Claim 2 or 3, in which, in the overlayer, the outward-facing region (6) of the upper layer (2) comprises a mixture of polymeric and/or monomeric plasticizers.

5. Process for the production of a multilayer foil according to Claim 3 or 4, in which the following steps are carried out:
- production of the upper layer made of polyvinyl chloride by means of a calendering process or by means of an extrusion process,
- production of the one or more lower layers made of polyvinyl chloride by the transfer coating process, where
a) successively, the one or more lower layers made of polyvinyl chloride are spread onto a carrier material and optionally a final textile layer is introduced,
b) the laminate comprising lower layers and produced by the spreading process is dried/gelled and is peeled from the carrier material,
- lamination to apply the overlayer produced by the calendering process or extrusion process to the laminate made of lower layers and produced by the transfer coating process,
- optionally coating and embossment of the external surface of the overlayer.

6. Interior cladding part for a vehicle, in particular seat covering for a vehicle seat, composed of a foil according to any of Claims 1 to 4.

## Revendications

1. Film multicouche, qui comprend une couche supérieure éventuellement vernie (2) en polychlorure de vinyle plastifié, ainsi qu'une ou plusieurs couches inférieures (3), au moins une de ces dernières étant constituée de polychlorure de vinyle plastifié, notamment pour l'habillage intérieur de véhicules automobiles, les couches en polychlorure de vinyle (2, 3) contenant un ou plusieurs plastifiants, **caractérisé en ce que** la zone (6) orientée vers l'extérieur de la couche supérieure (2) contient un ou plusieurs plastifiants monomères du groupe constitué par les esters de l'acide phtalique à partir de radicaux alkyle en C12 et les esters de l'acide triméllitique à partir de radicaux alkyle en C7, qui présentent un poids moléculaire d'au moins 500 g/mol, et **en ce que** les couches inférieures (3) en polychlorure de vinyle contiennent un ou plusieurs plastifiants ayant un poids moléculaire de 400 à 600 g/mol et une des couches inférieures est constituée de polychlorure de vinyle moussé et des additifs adéquats.

2. Film multicouche selon la revendication 1, dans lequel les couches inférieures (3) en polychlorure de vinyle contiennent en tant que plastifiant un ou plusieurs du groupe constitué par les esters de l'acide triméllitique, les esters de l'acide sébacique, les esters de l'acide adipique, les huiles époxydées, les esters de l'acide phosphorique, les esters de l'acide citrique, les esters d'acides gras, les esters de l'acide téréphtalique ou les esters de l'acide phtalique.

3. Film multicouche selon l'une quelconque des revendications 1 ou 2, dans lequel la zone (6) orientée vers l'extérieur de la couche supérieure (2) en polychlorure de vinyle contient un ou plusieurs plastifiants qui présentent un poids moléculaire ayant une moyenne en poids M_{w} d'au moins 1 500 g/mol, de préférence d'au moins 2 000 g/mol.

4. Film multicouche selon la revendication 2 ou 3, dans lequel la zone (6) orientée vers l'extérieur de la couche supérieure (2) contient un mélange de plastifiants polymères et/ou monomères dans la couche supérieure.

5. Procédé de fabrication d'un film multicouche selon l'une quelconque des revendications 3 à 4, dans lequel les étapes de procédé suivantes sont réalisées :
- la fabrication de la couche supérieure en polychlorure de vinyle par un procédé de calandrage ou par un procédé d'extrusion,
- la fabrication de la ou des couches inférieures en polychlorure de vinyle par un procédé d'enduction inverse,
a) la ou les couches inférieures en polychlorure de vinyle étant enduites successivement sur un matériau support et une couche textile finale étant éventuellement appliquée,
b) le composite de couches inférieures formé par l'enduction étant séché/gélifié et détaché du matériau support,
- la stratification de la couche supérieure fabriquée par le procédé de calandrage ou d'extrusion sur le composite de couches inférieures formé par le procédé d'enduction inverse,
- éventuellement un vernissage et un gaufrage de la surface extérieure de la couche supérieure.

6. Partie d'habillage intérieur pour véhicule automobile, notamment revêtement de siège pour siège de véhicule automobile, constituée par un film selon l'une quelconque des revendications 1 à 4.
